# EUROPEAN PATENT APPLICATION

(11) **EP 1 553 295 A2**
(43) Date of publication of application: **13.07.2005**
(21) Application number: 05000069.4
(22) Date of filing: 04.01.2005
(51) Int. Cl.: F04B 35/04, F04B 39/12

(54) **Linear compressor with external vibration-absorbing structure**

(30) Priority: 06.01.2004 KR 2004000648
(71) Applicant: LG Electronics Inc., Seoul 150-010 (KR)
(72) Inventor: Park, Jong Jin, Namdong-ku Inchun-si 405-245 (KR); Park, Joon Woo, Youngdeungpo-ku Seoul 156-096 (KR)
(74) Representative: TER MEER STEINMEISTER & PARTNER GbR

(57) **Abstract**

A linear compressor comprises a base plate (55) and a hermetically sealed container (50) disposed at the upper surface of the base plate (55). The container (50) has an inlet port (51) and an outlet port (53) formed at both ends thereof, respectively. A piston (70) is linearly reciprocated in a cylinder (80) by means of a linear motor (60) to compress and discharge a fluid. A discharging unit assembly (82) is disposed in front of the outlet port (53) at the outside of the container (50) such that a fluid compressed in the cylinder (80) is discharged through the discharging unit assembly (82). A vibration-absorbing unit (90) is connected to the outside of the container (50) in the moving direction of the motor (60) for absorbing vibrations generated from the compressor. According to the present invention, the number of the components disposed in the container (50) is reduced. Consequently, the compressor is miniaturized, and vibration-absorbing efficiency is improved while the vibration-absorbing unit (90) is designed without limits.

## Description

### BACKGROUND OF THE INVENTION

### Field of the Invention

The present invention relates to a linear compressor, and more particularly to a linear compressor having a vibration-absorbing unit disposed at the outside of a hermetically sealed container, whereby the size of the hermetically sealed container is reduced while vibration-absorbing efficiency is improved.

### Description of the Related Art

Generally, a linear compressor is constructed such that a linear driving force from a linear motor is transmitted to a piston, which is linearly reciprocated in a cylinder, whereby a fluid is introduced, compressed, and discharged.

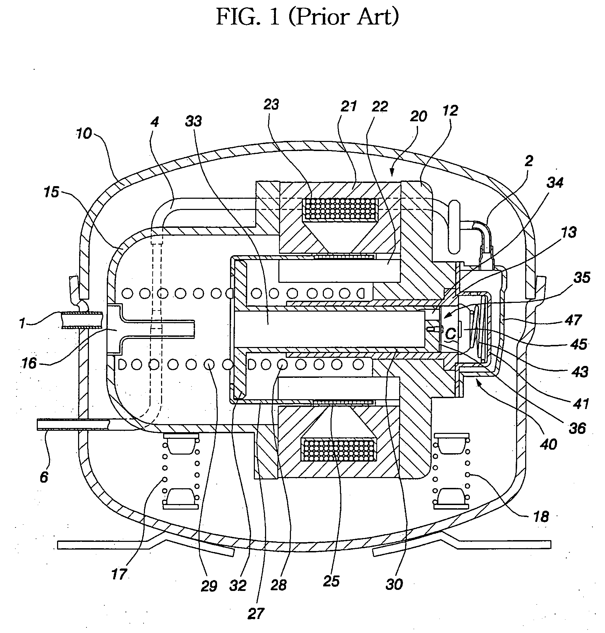

Fig. 1 is a longitudinal sectional view showing a conventional linear compressor. As shown in Fig. 1, the conventional linear compressor comprises a cylinder block 12 and a back cover 15 mounted inside a hermetically sealed container 10. The cylinder block 12 has a cylinder 13 formed therein, and the back cover 15 has a fluid inlet port 16 formed therein. The cylinder block 12 and the back cover 15 are disposed in the hermetically sealed container 10 in such a manner that shocks applied to the cylinder block 12 and the back cover 15 are absorbed by means of a first damper 17 and a second damper 18, respectively.

Between the cylinder block 12 and the back cover 15 is disposed a linear motor 20 that generates a driving force which is necessary to compress a fluid. To the linear motor 20 is connected a piston 30 that is linearly reciprocated in the cylinder 13 to compress a fluid introduced into the cylinder 13.

The linear motor 20 comprises a stator and a mover. The stator comprises: a laminated outer core 21; a laminated inner core 22 disposed such that the inner core 22 is spaced apart from the outer core 21 by a prescribed distance; and a coil 23 wound on the outer core 21 for generating a magnetic field.

The mover comprises: a magnet 25 disposed between the outer core 21 and the inner core 22 such that the magnet 25 is linearly moved by a magnetic force of the coil 23; and a magnet frame 27 connected to the piston 30 for transmitting a linear moving force to the piston. The magnet 25 is fixed to the magnet frame 27.

The piston 30 is provided at the rear part thereof with a flange 32, which is fixed to the magnet frame 27. The piston 30 is elastically supported by means of a first spring 28 disposed between the flange 32 and the cylinder block 12 and a second spring 28 disposed between the flange 32 and the back cover 15.

The piston 30 has a fluid flow channel 33 formed therein. The front end of the piston 30 is closed. At the closed front end of the piston are formed a plurality of inlet holes 34. In front of the piston 30 is disposed an inlet valve 35 that opens and closes the inlet holes 34. The inlet valve 35 has a valve plate 36 that is fixed to the piston 30 by means of a bolt. The valve plate 36 is elastically bent on the basis of the difference in pressure at both sides thereof for opening or closing the inlet holes 34.

A discharging unit 40 comprises: an inner outlet cover 41 mounted to the cylinder block 12 in front of a compression chamber C of the cylinder 13, the inner outlet cover 41 having a fluid outlet hole formed at one side thereof; a valve body 45 supported against the inner outlet cover 41 by means of a spring 43 for opening and closing the compression chamber C of the cylinder 13; and an outer outlet cover 47 disposed at the outside of the inner outlet cover 41 such that a predetermined space is defined between the inner outlet cover 41 and the outer outlet cover 47.

In Fig. 1, reference numeral 1 indicates an inlet connection pipe connected to the hermetically sealed container 10 while penetrating the hermetically sealed container 10 such that a fluid is introduced into the hermetically sealed container 10 through the inlet connection pipe, reference numeral 2 indicates an outlet pipe connected to the outer outlet cover 47 of the discharging unit 40 such that a fluid having passed through the discharging unit 40 is discharged through the outlet pipe, reference numeral 4 indicates a loop pipe having one end connected to the outlet pipe 4, and reference numeral 6 indicates an outlet connection pipe having one end connected to the loop pipe 4. The outlet connection pipe 6 penetrates the hermetically sealed container 10 such that the outlet connection pipe 6 extends out of the hermetically sealed container 10.

The operation of the conventional linear compressor with the above-stated construction will now be described.

As the linear motor 20 is operated, the magnet 25 is linearly reciprocated by means of a magnetic field generated around the coil 23. The reciprocating movement of the magnet 25 is transmitted to the piston 30 via the magnet frame 27. As a result, the piston 30 is continuously reciprocated between the valve body 45 of the discharging unit 40 and the back cover 15.

When the piston 30 is moved forward, i.e., toward the discharging unit 40, the inlet valve 35 is closed due to the difference in pressure between the fluid flow channel 33 and the compression chamber C. As a result, the fluid in the compression chamber C is compressed, and is then discharged through the discharging unit 40. The fluid outside the back cover 15 is introduced through the fluid inlet port 16.

When the piston 30 is moved backward, on the other hand, the inlet valve 35 is opened due to the difference in pressure between the fluid flow channel 33 and the compression chamber C. As a result, the fluid in the fluid flow channel 33 of the piston 30 is introduced into the compression chamber C through the inlet holes 34. As the piston 30 is subsequently moved forward, the fluid in the compression chamber C is compressed, and is then discharged. The above-described operation is repetitively carried out.

In the above-mentioned conventional linear compressor, however, not only operating components necessary to compress a fluid but also supporting components necessary to support the operating components and vibration-absorbing components necessary to absorb vibrations generated from the operating components are disposed in the hermetically sealed container 10. As a result, it is difficult to miniaturize the linear compressor.

### SUMMARY OF THE INVENTION

Therefore, the present invention has been made in view of the above problems, and it is an object of the present invention to provide a linear compressor having a vibration-absorbing unit disposed at the outside of a hermetically sealed container to reduce the number of the components disposed in the hermetically sealed container, whereby the linear compressor is miniaturized, and vibration-absorbing efficiency is improved while the vibration-absorbing unit is designed without limits.

In accordance with one aspect of the present invention, the above and other objects can be accomplished by the provision of a linear compressor with an external vibration-absorbing structure, comprising: a base plate; a hermetically sealed container disposed at the upper surface of the base plate, the hermetically sealed container having an inlet port and an outlet port formed at both ends thereof, respectively, the hermetically sealed container being constructed such that a piston is linearly reciprocated in a cylinder by means of a linear motor to compress and discharge a fluid; a discharging unit assembly disposed in front of the outlet port at the outside of the hermetically sealed container such that a fluid compressed in the cylinder is discharged through the discharging unit assembly; and a vibration-absorbing unit connected to the outside of the hermetically sealed container in the moving direction of the linear motor for absorbing vibrations generated from the compressor.

Preferably, the vibration-absorbing unit is connected to the discharging unit assembly.

Preferably, the discharging unit assembly comprises: an outlet cover mounted to the outside of the hermetically sealed container for absorbing shocks generated from the fluid discharged through the outlet port.

Preferably, the vibration-absorbing unit is connected to the outlet cover.

Preferably, the vibration-absorbing unit is a dynamic vibration absorber that absorbs vibrations by means of a supplementary mass.

Preferably, the vibration-absorbing unit comprises: a boss part connected to the hermetically sealed container; a supplementary mass part disposed around the boss part; and plate springs connected between the boss part and the supplementary mass part.

Preferably, the boss part is connected to the hermetically sealed container via a shaft.

Preferably, the supplementary mass part is formed in the shape of a ring, and the front and rear ends of the boss part are connected with the front and rear ends of the supplementary mass part by means of the plate springs, respectively.

Preferably, each of the plate springs has scroll-shaped slits extending from the boss part to the supplementary mass part.

In accordance with another aspect of the present invention, there is provided a linear compressor with an external vibration-absorbing structure, comprising: a hermetically sealed container having an inlet port and an outlet port formed therein; a linear motor fixed to the inside of the hermetically sealed container for generating a linear moving force; a cylinder fixed to the inside of the hermetically sealed container adjacent to the outlet port; a discharging unit assembly disposed in front of the outlet port at the outside of the hermetically sealed container such that a fluid compressed in the cylinder is discharged through the discharging unit assembly; a piston connected to the linear motor such that the piston is linearly reciprocated in the cylinder for compressing fluid introduced into the cylinder; main springs connected to the front and rear sides of the piston, respectively, while being supported inside the hermetically sealed container for providing elastic forces to facilitate the reciprocating movement of the piston when the piston is reciprocated; and a vibration-absorbing unit connected to the discharging unit assembly at the outside of the hermetically sealed container for absorbing vibrations generated from the compressor.

In accordance with yet another aspect of the present invention, there is provided a linear compressor with an external vibration-absorbing structure, comprising: a base plate; a hermetically sealed container disposed at the upper surface of the base plate, the hermetically sealed container having an inlet port and an outlet port formed at both ends thereof, respectively, the hermetically sealed container being constructed such that a piston is linearly reciprocated in a cylinder by means of a linear motor to compress and discharge a fluid; and a vibration-absorbing unit connected to the outside of the hermetically sealed container in the moving direction of the linear motor for absorbing vibrations generated from the compressor.

In the linear compressor with the external vibration-absorbing structure according to the present invention, the vibration-absorbing unit is disposed at the outside of the hermetically sealed container to reduce the number of the components disposed in the hermetically sealed container. Consequently, the linear compressor is miniaturized, and vibration-absorbing efficiency is improved while the vibration-absorbing unit is designed without limits.

### BRIEF DESCRIPTION OF THE DRAWINGS

The above and other objects, features and other advantages of the present invention will be more clearly understood from the following detailed description taken in conjunction with the accompanying drawings, in which:
Fig. 1 is a longitudinal sectional view showing a conventional linear compressor;
Fig. 2 is a longitudinal sectional view showing a linear compressor with an external vibration-absorbing structure according to the present invention; and
Fig. 3 is a side view showing a vibration-absorbing unit of the linear compressor with the external vibration-absorbing structure according to the present invention.

### DESCRIPTION OF THE PREFERRED EMBODIMENTS

Now, a preferred embodiment of the present invention will be described in detail with reference to the accompanying drawings.

It should be understood that linear compressors with external vibration-absorbing structures according to numerous preferred embodiments of the present invention may be proposed, although only the most preferred embodiment of the present invention will be hereinafter described.

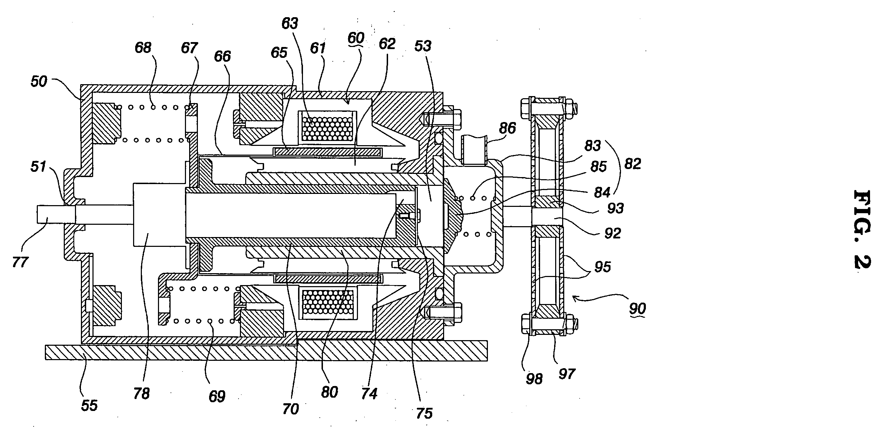

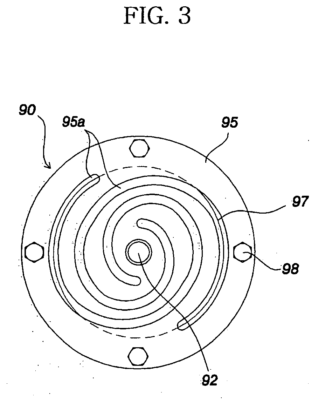

Fig. 2 is a longitudinal sectional view showing a linear compressor with an external vibration-absorbing structure according to the present invention, and Fig. 3 is a side view showing a vibration-absorbing unit of the linear compressor with the external vibration-absorbing structure according to the present invention.

As shown in Fig. 2, the linear compressor according to the present invention comprises: a base plate 55 fixed or disposed at a predetermined position; a hermetically sealed container 50 disposed at the upper surface of the base plate 55, the hermetically sealed container 50 having an inlet port 51 and an outlet port 53 formed at both ends thereof, respectively; a discharging unit assembly 82 disposed in front of the outlet port 53 at the outside of the hermetically sealed container 50 such that a fluid compressed in a cylinder 80 is discharged through the discharging unit assembly 82; and a vibration-absorbing unit 90 connected to the outside of the hermetically sealed container 50 for absorbing vibrations generated from the compressor.

The hermitically sealed container 50 is formed in the shape of a cylinder. The inlet port 51 is disposed at the rear end of the hermitically sealed container 50 such that an inlet pipe 77 is inserted through the inlet port 51. The outlet assembly 82 is disposed at the front end of the hermetically sealed container 50.

In the hermitically sealed container 50 are disposed a linear motor 60 that generates a linear moving force; a cylinder 80 fixed to the inside of the hermetically sealed container 50 adjacent to the outlet port 53; a piston 70 connected to the linear motor 60 such that the piston 70 is linearly reciprocated in the cylinder 80 for compressing fluid introduced into the cylinder; and main springs 68 and 69 connected to the front and rear sides of the piston 70, respectively, for providing elastic forces to facilitate the reciprocating movement of the piston when the piston is reciprocated.

The linear motor 60 comprises a stator and a mover. The stator comprises: a laminated outer core 61; a laminated inner core 62 disposed such that the inner core 62 is spaced apart from the outer core 61 by a prescribed distance; and a coil 63 wound on the outer core 61 for generating a magnetic field. The mover comprises: a magnet 65 disposed between the outer core 61 and the inner core 62 such that the magnet 65 is linearly moved by a magnetic force created around the coil 63; and a magnet frame 66 connected to the piston 70 for transmitting a linear moving force to the piston 70. The magnet 65 is fixed to the magnet frame 66.

At the rear of the piston 70 is disposed a spring-supporting body 67. At the front and rear sides of the spring-supporting body 67 are disposed the main springs 68 and 69 to provide elastic forces to the piston such that vibrations are successively applied to the piston in both directions. At the rear of the piston 70 is also disposed a silencer 78, which is connected to the inlet pipe 77 for reducing inlet noise.

At the front end of the piston 70 are formed a plurality of inlet holes 74, which are opened and closed by means of an inlet valve 74 attached to the front end of the piston 70.

The discharging unit assembly 82 comprises: an outlet cover 83 mounted to the outside of the hermetically sealed container 50 by means of bolts for absorbing shocks generated from the fluid discharged through the outlet port 53 and allowing the fluid having been discharged through the outlet port 53 to be discharged through an outlet pipe 86; an outlet valve 84 disposed at the exit of the cylinder 80 in the outlet cover 83 for opening and closing the outlet port 53; and an outlet spring 85 supported against the outlet cover 83 for providing an elastic force to the outlet valve 84.

The vibration-absorbing unit 90 is connected to the outlet cover at the outside of the hermetically sealed container 50 in the moving direction of the linear motor 60 for absorbing vibrations generated from the compressor.

Preferably, the vibration-absorbing unit 90 is a dynamic vibration absorber that absorbs vibrations by means of a supplementary mass. The vibration-absorbing unit 90 comprises: a boss part 93 connected to the outlet cover 83 at the outside of the hermetically sealed container 50 via a connection shaft 92; a supplementary mass part 97 spaced apart from the boss part 93 by a predetermined distance; and plate springs 95 connected between the boss part 93 and the supplementary mass part 97.

The supplementary mass part 97 is formed in the shape of a ring having a predetermined amount of mass. The front and rear ends of the boss part 93 are connected with the front and rear ends of the supplementary mass part 97 by means of the plate springs 95, respectively.

Preferably, one of the plate springs 95 is attached to the front ends of the boss part 93 and the supplementary mass part 97 by means of bolts 98, and the other plate spring 95 is attached to the rear ends of the boss part 93 and the supplementary mass part 97 by means of the bolts 98. Also preferably, each of the plate springs 95 has scroll-shaped slits 95a extending from the boss part 93 to the supplementary mass part 97, as shown in Fig. 3.

The operation of the linear compressor with the external vibration-absorbing structure as described above will now be described.

As the linear motor 60 is operated, the magnet 65 is linearly reciprocated by means of a magnetic field generated around the coil 63. The reciprocating movement of the magnet 65 is transmitted to the piston 70 via the magnet frame 66. As a result, the piston 70 is continuously reciprocated in the cylinder 80 for compressing the fluid introduced into the cylinder 80 and discharging the compressed fluid.

When the piston 70 is moved forward, i.e., toward the discharging unit assembly 82, the outlet valve 84 is opened, and thus the fluid compressed in the cylinder 80 is discharged out of the linear compressor through the outlet cover 83 and the outlet pipe 86. When the piston 70 is moved backward, the inlet valve 75 is opened, and thus the fluid introduced into the piston 70 is guided into the cylinder 80 through the inlet holes 74.

The vibration-absorbing unit 90 is disposed at the outside of the hermetically sealed container 50 for absorbing vibrations generated in the direction in which the linear motor 60 and the piston 70 are moved when the linear compressor is operated.

The operating principle of the vibration-absorbing unit 90 is as follows: if an absorber mass, such as the supplementary mass part 97, is added to the vibration-absorbing unit 90 in the case that an external force is periodically applied to a damping-free system, the number of natural vibrations of the system, such as the hermetically sealed container 50 is doubled. A frequency band having an amplitude of 0 is found between these two natural vibration zones.

When vibrations are applied to the hermetically sealed container 50 at this frequency band, the vibrations are transmitted to the supplementary mass part 97, which is the absorber mass. As a result, the hermetically sealed container 50 is not vibrated. The vibration-absorbing unit operable according to the above-mentioned principle is referred to as a "dynamic vibration absorber". As the number of natural vibrations of the supplementary mass part 97 is equal to the number of vibrations of an external force applied to the hermetically sealed container 50, the vibrations are received by the supplementary mass part 97, whereby the vibrations are reduced.

As apparent from the above description, the present invention provides a linear compressor with an external vibration-absorbing structure wherein a vibration-absorbing unit is disposed at the outside of a hermetically sealed container to reduce the number of the components disposed in the hermetically sealed container. Consequently, the present invention has the effect that the linear compressor is miniaturized, and vibration-absorbing efficiency is improved while the vibration-absorbing unit is designed without limits.

Although the preferred embodiment of the present invention has been disclosed for illustrative purposes, those skilled in the art will appreciate that various modifications, additions and substitutions are possible, without departing from the scope and spirit of the invention as disclosed in the accompanying claims.

## Claims

1. A linear compressor with an external vibration-absorbing structure, comprising:
a base plate (55);
a hermetically sealed container (50) disposed at the upper surface of the base plate (55), the hermetically sealed container having an inlet port (51) and an outlet port (53) formed at both ends thereof, respectively, the hermetically sealed container (50) being constructed such that a piston (70) is linearly reciprocated in a cylinder (80) by means of a linear motor (60) to compress and discharge a fluid;
a discharging unit assembly (82) disposed in front of the outlet port (53) at the outside of the hermetically sealed container (50) such that a fluid compressed in the cylinder (80) is discharged through the discharging unit assembly (82); and
a vibration-absorbing unit (90) connected to the outside of the hermetically sealed container (50) in the moving direction of the linear motor (60) for absorbing vibrations generated from the compressor.

2. The compressor as set forth in claim 1, wherein the vibration-absorbing unit (90) is connected to the discharging unit assembly (82).

3. The compressor as set forth in claim 2, wherein the discharging unit assembly (82) comprises:
an outlet cover (83) mounted to the outside of the hermetically sealed container (50) for absorbing shocks generated from the fluid discharged through the outlet port (53).

4. The compressor as set forth in claim 3, wherein the vibration-absorbing unit (90) is connected to the outlet cover (83).

5. The compressor as set forth in claim 1, wherein the vibration-absorbing unit (90) is a dynamic vibration absorber that absorbs vibrations by means of a supplementary mass.

6. The compressor as set forth in claim 1, wherein the vibration-absorbing unit (90) comprises:
a boss part (93) connected to the hermetically sealed container (50);
a supplementary mass part (97) disposed around the boss part (93); and
plate springs (95) connected between the boss part (93) and the supplementary mass part (97).

7. The compressor as set forth in claim 6, wherein the boss part (93) is connected to the hermetically sealed container (50) via a shaft (92).

8. The compressor as set forth in claim 6, wherein
the supplementary mass part (97) is formed in the shape of a ring, and
the front and rear ends of the boss part (93) are connected with the front and rear ends of the supplementary mass part (97) by means of the plate springs (95), respectively.

9. The compressor as set forth in claim 6, wherein each of the plate springs (95) has scroll-shaped slits extending from the boss part (93) to the supplementary mass part (97).

10. A linear compressor with an external vibration-absorbing structure, comprising:
a hermetically sealed container (50) having an inlet port (51) and an outlet port (53) formed therein;
a linear motor (60) fixed to the inside of the hermetically sealed container (50) for generating a linear moving force;
a cylinder (80) fixed to the inside of the hermetically sealed container (50) adjacent to the outlet port (53);
a discharging unit assembly (82) disposed in front of the outlet port (53) at the outside of the hermetically sealed container (50) such that a fluid compressed in the cylinder (80) is discharged through the discharging unit assembly (82);
a piston (70) connected to the linear motor (60) such that the piston (70) is linearly reciprocated in the cylinder (80) for compressing fluid introduced into the cylinder (80);
main springs (68, 69) connected to the front and rear sides of the piston (70), respectively, while being supported inside the hermetically sealed container (50) for providing elastic forces to facilitate the reciprocating movement of the piston (70) when the piston (70) is reciprocated; and
a vibration-absorbing unit (90) connected to the discharging unit assembly (82) at the outside of the hermetically sealed container (50) for absorbing vibrations generated from the compressor.
